# EUROPÄISCHE PATENTSCHRIFT

(11) **EP 3 595 914 B1**
(45) Veröffentlichungstag und Bekanntmachung des Hinweises auf die Patenterteilung: **03.03.2021**
(21) Anmeldenummer: 18711858.3
(22) Anmeldetag: 06.03.2018
(51) Int. Cl.: B60T 7/08

(54) **BETÄTIGUNGSEINRICHTUNG ZUM STEUERN EINER, INSBESONDERE ELEKTRONISCHEN, PARKBREMSVORRICHTUNG EINES FAHRZEUGS**
ACTUATION MECHANISM FOR CONTROLLING A, IN PARTICULAR ELECTRONIC, PARKING BRAKE OF A VEHICLE
DISPOSITIF, NOTAMMENT ELECTRONIQUE, DE CONTRÔLE D'UN FREIN DE STATIONNEMENT DE VEHICULE

(30) Priorität: 16.03.2017 DE 102017105690
(43) Veröffentlichungstag der Anmeldung: 22.01.2020
(73) Patentinhaber: KNORR-BREMSE Systeme für Nutzfahrzeuge GmbH, 80809 München (DE)
(72) Erfinder: ZEMAN, Ferenc, 1114 Budapest (HU)
(86) Internationale Anmeldenummer: PCT/EP2018/055507
(87) Internationale Veröffentlichungsnummer: WO 2018/166849

(56) Entgegenhaltungen:
- CN-B- 103 465 883
- JP-U- S5 847 551
- US-A- 4 311 060

## Beschreibung

Die vorliegende Erfindung betrifft eine Betätigungseinrichtung, insbesondere einen Kippschalter, zum Steuern einer, insbesondere elektronischen, Parkbremsvorrichtung eines Fahrzeugs, insbesondere eines Nutzfahrzeugs, mit wenigstens einem Betätigungshebel, wobei der Betätigungshebel wenigstens einen Betätigungsknopf aufweist, und mit wenigstens einem Aufnahmeelement, wobei der Betätigungshebel und das Aufnahmeelement drehbar miteinander verbunden sind.

Im Zuge der voranschreitenden Elektrifizierung der Parkbremsvorrichtungen von Netzfahrzeugen können insbesondere im Zusammenhang mit elektronischen Parkbremsvorrichtungen auch alternative Betätigungseinrichtungen Anwendung finden, da die Betätigungseinrichtungen elektronischer Parkbremsvorrichtungen zukünftig häufiger elektrisch ausgebildet sein können. Somit können einerseits teure und konstruktive anspruchsvolle pneumatische Betätigungseinrichtungen durch strukturell einfacher aufgebaute elektrische Betätigungseinrichtungen ersetzt werden und andererseits im Hinblick auf deren Formgebungen (z.B. Betätigungshebel) und Wirkprinzipien größere Freiheitsgrade generiert werden.

Aus dem Stand der Technik sind bereits derartige Betätigungseinrichtungen bekannt, mit welchen sich der Betriebszustand einer, insbesondere elektronischen, Parkbremsvorrichtung steuern lässt.

So zeigt beispielsweise die EP 2 379 386 B1 eine Betätigungseinrichtung für eine Parkbremse eines Fahrzeugs, welches insbesondere ein Nutzfahrzeug ist, wobei die Betätigungseinrichtung eine für den Fahrbetrieb vorgesehene Betriebsbremse und die zum Feststellen des Fahrzeugs vorgesehene Parkbremse aufweist. Mittels der Parkbremse ist hierbei eine erste Bremswirkung für das Fahrzeug unabhängig von einem Bremsvorgang der Betriebsbremse erzeugbar.

Ferner offenbart die EP 1 997 700 B1 eine Betätigungseinrichtung für eine Bremsanlage eines Fahrzeugs, insbesondere eines Nutzfahrzeugs, welche ein manuell betätigbares Betätigungselement zur Betätigung der Parkbremse aufweist, das entlang einer Bewegungsbahn auslenkbar ist. Die Betätigungseinrichtung weist ferner mehrere Schaltzustände auf: In einem ersten Schaltzustand ist die Bremswirkung der Parkbremse von der Auslenkung des Betätigungselements entlang der Bewegungsbahn abhängig. In einem zweiten Schaltzustand ist die volle Bremswirkung der Parkbremse bereitstellbar.

Weitere manuell betätigbare Betätigungseinrichtungen sind beispielsweise aus der WO 2011/039556 A1, der CN 203958116 U, der EP 2 468 590 A1, der EP 2 045 157 A2, der DE 10 2006 041 009 A1, der DE 10 2008 003 379 A1, der US 7,373,855 B2, der WO 2010/078880 A1, der DE 197 51 431 A1, der DE 10 2006 036 748 A1, der EP 2 133 247 A2, der DE 199 55 797 A1 sowie EP 2 108 555 A2 bekannt.

Darüber hinaus werden weitere Beispiele des Stands der Technik in z.B. der CN 103 465 883 B beschrieben, die einen Parkbetätigungsgriff bereitstellt, der aufweist: eine Halterung, eine Zugstange, die drehbar mit der Halterung verbunden ist, und einen Einstellmechanismus.

Derartige Betätigungseinrichtungen können aufgrund der wachsenden Anzahl an zu vereinenden Funktions- und Steuerungsmöglichkeiten der elektronischen Parkbremsvorrichtung zum einen komplex aufgebaut sein und zum anderen wenig intuitiv bzw. schwierig zu bedienen sein.

Es ist daher die Aufgabe der vorliegenden Erfindung, eine Betätigungseinrichtung der eingangs genannten Art in vorteilhafter Weise weiterzubilden, insbesondere dahingehend, dass eine fehlerhafte Betätigung der Betätigungseinrichtung durch einen Fahrzeugführer eines Nutzfahrzeugs nahezu ausgeschlossen werden kann und dass deren Betätigung erleichtert und intuitiver ausgebildet wird.

Diese Aufgabe wird erfindungsgemäß durch eine Betätigungseinrichtung mit den Merkmalen des Anspruchs 1 gelöst. Danach ist vorgesehen, dass eine Betätigungseinrichtung zum Steuern einer, insbesondere elektronischen, Parkbremsvorrichtung eines Fahrzeugs, insbesondere eines Nutzfahrzeugs, mit wenigstens einem Betätigungshebel, wobei der Betätigungshebel wenigstens einen Betätigungsknopf aufweist, und mit wenigstens einem Aufnahmeelement versehen ist, wobei der Betätigungshebel und das Aufnahmeelement drehbar miteinander verbunden sind und um eine Drehachse relativ zueinander verdrehbar sind, wobei die Betätigungseinrichtung wenigstens einen Betätigungsschaltzustand und wenigstens einen Löseschaltzustand aufweist, wobei der Betätigungsschaltzustand wenigstens aus einer ersten Drehbewegung des Betätigungshebels in eine erste Drehrichtung bezogen auf das Aufnahmeelement und einer ersten Betätigung des Betätigungsknopfes resultiert und wobei der Löseschaltzustand wenigstens aus einer zweiten Drehbewegung des Betätigungshebels in die erste Drehrichtung bezogen auf das Aufnahmeelement und einer zweiten Betätigung des Betätigungsknopfes resultiert, wobei der Betätigungsschaltzustand einem Betätigen der Parkbremsvorrichtung zugeordnet ist und wobei der Löseschaltzustand einem Lösen der Parkbremsvorrichtung zugeordnet ist.

Die Erfindung basiert auf dem Grundgedanken, die Betriebszustände, insbesondere den Löse- und Betätigungsschaltzustand, einer elektronischen Parkbremsvorrichtung eines Nutzfahrzeugs durch eine Betätigung des Betätigungsknopfs und durch eine Drehbewegung des Betätigungshebels zu steuern. Die Betätigungseinrichtung ist insbesondere als Kippschalter ausgebildet. Der Betätigungsknopf ist ferner insbesondere als Drucktaster ausgebildet. Im Zuge der Entwicklung aktueller Betätigungseinrichtungen besteht grundsätzlich eine Herausforderung darin, einerseits eine wachsende Anzahl an Funktionen in die Betätigungseinrichtung zu integrierten, andererseits aber deren Bedienbarkeit nicht unverhältnismäßig weiter zu verkomplizieren. Dieser Herausforderung kann durch das Vorsehen eines zusätzlichen Betätigungsknopfs an dem Betätigungshebel begegnet werden. So ermöglicht der Betätigungsknopf bereits das Betätigen und das Lösen der elektronischen Parkbremsvorrichtung infolge einer zuvor erfolgten Drehbewegung, so dass für die Erzeugung eines oder mehreren weiteren Schaltzuständen durch den Betätigungshebel eine diesbezügliche Vereinfachung erzielt werden kann. Dies bietet insbesondere den Vorteil einer größeren Variabilität in der Zuordnung der Drehbewegung des Betätigungshebels und des jeweiligen weiteren daraus resultierenden Schaltzustands, da das Lösen und das Betätigen der elektronischen Parkbremsvorrichtung nicht mehr nur aus einer reinen Drehbewegung des Betätigungshebels erfolgen muss. Die Drehbewegung des Betätigungshebels kann insbesondere eine Kipp- oder Schwenkbewegung sein. Infolgedessen kann das Betätigungsmuster individuell an unterschiedliche Rahmenbedingungen (wie z.B. Kundenwünsche, verschiedene Betätigungsmuster in unterschiedlichen Regionen der Welt) in vorteilhafter Weise angepasst werden. Daraus ergibt sich für einen Fahrzeugführer zusätzlich der Vorteil einer einfacheren und intuitiveren Betätigung der Betätigungseinrichtung. Somit können Betriebsstörungen der elektronischen Parkbremsvorrichtung, beispielsweise durch fehlerhaftes Betätigen der Betätigungseinrichtung durch einen Fahrzeugführer, zukünftig nahezu ausgeschlossen werden. Hierdurch erhöht sich die Betriebssicherheit sowohl der elektronischen Parkbremsvorrichtung als auch des Nutzfahrzeugs im Ganzen erheblich.

Im Übrigen kann vorgesehen sein, dass die Betätigungseinrichtung einen Trailertestschaltzustand aufweist, wobei der Trailertestschaltzustand wenigstens aus einer dritten Drehbewegung des Betätigungshebels in die erste Drehrichtung bezogen auf das Aufnahmeelement resultiert, und wobei der Trailertestschaltzustand einer Trailertestfunktion der Parkbremsvorrichtung zugeordnet ist. Durch das Vorsehen eines weiteren Schaltzustands, nämlich des Trailertestschaltzustands, wird eine höhere Funktionalitätsdichte der Betätigungseinrichtung erreicht, ohne dabei dessen Bedienung wesentlich zu verkomplizieren. Denn die Trailertestfunktion resultiert aus einem sehr ähnlichen Betätigungsmuster wie der Betätigungsschaltzustand. Durch die Funktionsintegration des Trailertestschaltzutands kann zudem beispielsweise eine weitere Betätigungseinrichtung zum Steuern der Trailertestfunktion entfallen. Demzufolge können sämtliche Schaltzustände von einer Betätigungseinrichtung herbeigeführt werden, sodass sich die Bedienbarkeit der Betätigungseinrichtung durch das Vorsehen des Trailertestschaltzustands für den Fahrzeugführer erleichtert und intuitiver gestaltet. Die Trailertestfunktion der elektronischen Parkbremsvorrichtung ermöglicht im Parkzustand des Nutzfahrzeugs ein vollständiges Aufheben der Bremswirkung eines Anhängerfahrzeugs, wodurch die Bremswirkung der elektronischen Parkbremsvorrichtung temporär lediglich auf ein Zugfahrzeug ausgeübt wird. Ziel der Trailertestfunktion ist eine Sicherheitsüberprüfung, ob die Bremswirkung der elektronischen Parkbremsvorrichtung, die nur auf das Zugfahrzeug ausgeübt wird, ausreichend ist, um das gesamte Nutzfahrzeug (bestehend aus Zugfahrzeug und Anhängerfahrzeug) sicher im Stillstand bzw. im geparkten Zustand halten kann. Die Trailertestfuntion kann sich insbesondere dann als nützlich erweisen, wenn das Nutzfahrzeugen an Steigungen geparkt wird.

Weiter ist vorstellbar, dass die Betätigungseinrichtung zusätzlich zum Steuern einer, insbesondere elektronischen, Betriebsbremsvorrichtung des Fahrzeugs eingerichtet ist, wobei die Betätigungseinrichtung wenigstens einen Streckbremsschaltzustand aufweist, der einer Streckbremsfunktion der Betriebsbremsvorrichtung und/oder der Parkbremsvorrichtung zugeordnet ist. Insbesondere im Zusammenhang mit Nutzfahrzeugen, die einen Auflieger oder ein zusätzliches Anhängerfahrzeug umfassen, ist das Vorsehen einer Streckbremsfunktion mittels der Betriebsbremsvorrichtung besonders wichtig und vorteilhaft im Sinne der Erhöhung der Funktionssicherheit des Nutzfahrzeugs, weil ein möglicherweise einknickender Fahrzeugzug durch das alleinige Bremsen des Anhängerfahrzeugs geradegezogen und so stabilisiert wird. Die Streckbremsfunktion des Anhängerfahrzeugs kann dabei sowohl von der Parkbremsvorrichtung als auch von der Betriebsbremsvorrichtung des Nutzfahrzeugs gesteuert werden. Diese Streckbremsfunktion einem Streckbremsschaltzustand der Betätigungseinrichtung zuzuordnen ist besonders deshalb vorteilhaft, weil sich die Funktionalitätsdichte der Betätigungseinrichtung abermals erhöhen lässt. Andererseits kann gleichzeitig durch die Möglichkeit sowohl einer Drehbewegung des Betätigungshebels als auch der zusätzlichen Betätigungsmöglichkeit durch den Betätigungsknopf trotz der erhöhten Funktionalitätsdichte eine einfache und intuitive Betätigung aufrechterhalten bleiben.

Zudem ist denkbar, dass die Betätigungseinrichtung wenigstens einen graduellen Schaltzustand aufweist, durch den ein gradueller Betätigungsschaltzustand und/oder ein gradueller Löseschaltzustand einstellbar ist. Der graduelle Betätigungsschaltzustand ist dabei einem graduellen Betätigen der elektronischen Parkbremsvorrichtung zugeordnet, während der graduelle Löseschaltzustand einem graduellen Lösen der elektronischen Parkbremsvorrichtung zugeordnet. Mittels des graduellen Schaltzustands kann beispielsweise eine graduelle, d.h. eine in ihrer Bremswirkung gestufte, Betätigung der elektronischen Parkbremsvorrichtung mit Wirkung auf das gesamte Nutzfahrzeug eingestellt werden. Der graduelle Schaltzustand ist jedoch nur im Fahrbetrieb des Nutzfahrzeugs einstellbar. Die graduelle bzw. stufbare Betätigung der elektronischen Parkbremsvorrichtung während des Fahrbetriebs ist zum einen gesetzlich gefordert und kann zum anderen als Hilfsbremsfunktion oder als Notbremsfunktion die Betriebsbremsvorrichtung ergänzen. Der graduelle Schaltzustand ist demnach in Abhängigkeit der aktuell vorliegenden Fahrzeugbedingungen (zum Beispiel bei einer Hangabfahrt die jeweilige Steigung) graduell durch den Fahrzeugführer einstellbar. Diese Funktionalität ebenfalls in die Betätigungseinrichtung zu integrieren erhöht abermals die Funktionalitätsdichte der Betätigungseinrichtung, wobei dessen einfache und intuitive Bedienbarkeit nach wie vor aufgrund der großen Variabilität der Zuordnung der jeweiligen Schaltzustände durch den Betätigungsknopf und den Betätigungshebel erhalten bleibt. Ferner kann vorgesehen sein, dass durch den graduellen Schaltzustand ein gradueller Streckbremsschaltzustand einstellbar ist.

Zudem ist vorstellbar, dass der Betätigungsknopf als gefedert monostabiler Schiebeschalter oder als bistabiler Schiebeschalter ausgebildet ist. Die Ausbildung als Schiebeschalter hat insbesondere vor dem Hintergrund eines recht einfach unerwünscht betätigbaren Betätigungsknopfs (z.B. ein Drucktaster) eine Erhöhung der Sicherheit in der Bedienung der gesamten Betätigungseinrichtung zur Folge. Die leicht durchführbare ungewollte Betätigung des Betätigungsknopfs kann z.B. während der gestuften Bremsung durch unterbewusstes und regelmäßiges Betätigen des Betätigungsknopfs erfolgen, wodurch jedes Mal die Streckbremsfunktion unerwünscht aktiviert wird. Durch das Vorsehen eines Schiebeschalters kann die ungewollte Betätigung deutlich minimiert werden, sodass sich die gesamte Betätigungseinrichtung noch intuitiver und sicherer bedienen lässt. Hierdurch kann folglich auch die Gesamtsicherheit des Nutzfahrzeugs nochmals gesteigert werden. Auch vorstellbar ist, dass der Betätigungsknopf als gefedert monostabiler oder bistabiler Kippschalter, Wippschalter, Rastschalter, Schiebeschalter, Drehschalter, Stufenschalter, Tastschalter oder Zugschalter ausgebildet ist.

Außerdem ist möglich, dass die Betätigungseinrichtung wenigstens einen ersten rotatorischen Anschlag, wenigstens einen zweiten rotatorischen Anschlag, wenigstens eine radiale Umschaltposition und wenigstens eine radiale Ausgangsposition aufweist, welche entlang eines kreisförmigen Bahnkurvenabschnitts angeordnet sind, wobei die radiale Ausgangsposition an dem ersten rotatorischen Anschlag angeordnet ist und wobei die radiale Umschaltposition dem zweiten rotatorischen Anschlag angeordnet ist. Der erste rotatorische Anschlag dient vorteilhafterweise dazu, eine radial definierte Ausgangsposition bereitzustellen, in welche der Betätigungshebel infolge einer manuellen Drehbewegung in die erste Drehrichtung stets automatisiert mittels einer Drehfeder (in die entgegengesetzte, sprich zweite, Drehrichtung) zurückgestellt wird. Der zweite rotatorische Anschlag dient folglich dazu, eine jeweilige Drehbewegung des Betätigungshebels in eine erste Drehrichtung radial definiert zu begrenzen eine radial definierte Umschaltposition bereitzustellen. Somit kann durch die radial definierte Begrenzung der jeweiligen Drehbewegung in die erste Drehrichtung an der radialen Umschaltposition der jeweilig zugeordnete Schaltzustand eindeutiger herbeigeführt werden. Ebenso kann durch die radial definierte Begrenzung der jeweiligen Drehbewegung in die zweite Drehrichtung an der radialen Ausgangsposition der jeweilig zugeordnete Schaltzustand eindeutiger herbeigeführt werden.

Ebenfalls ist es vorstellbar, dass der Betätigungsschaltzustand aus der ersten Betätigung des Betätigungsknopfes infolge der ersten Drehbewegung des Betätigungshebels in die erste Drehrichtung ausgehend von seiner radialen Ausgangsposition resultiert, falls der Betätigungshebel an der radialen Umschaltposition angeordnet ist und falls sich das Nutzfahrzeug im Wesentlichen im Stillstand befindet.. Die Betätigung lediglich des Betätigungsknopfes infolge der ersten Drehbewegung des Betätigungshebels in die erste Drehrichtung an der radial definierten Umschaltposition bietet dem Fahrzeugführer eine sehr einfache und intuitive Möglichkeit den Betätigungsschaltzustand zu erzeugen. Durch die zusätzliche funktionale Bedingung, dass sich das Nutzfahrzeug im Stillstand befinden muss, können die Bedienungssicherheit und dadurch bedingt auch die Fahrzeugsicherheit nochmals erhöht werden. Der Betätigungsknopf kann als gefedert monostabiler oder bistabiler Betätigungsknopf ausgebildet sein.

Darüber hinaus ist denkbar, dass der Löseschaltzustand aus der zweiten Betätigung des Betätigungsknopfes infolge der zweiten Drehbewegung des Betätigungshebels in die erste Drehrichtung ausgehend von seiner radialen Ausgangsposition resultiert, falls der Betätigungshebel an der radialen Umschaltposition angeordnet ist und falls sich das Nutzfahrzeug im Wesentlichen im Stillstand befindet. Auch im Hinblick auf den Löseschaltzustand bietet die Betätigung des Betätigungsknopfes infolge der zweiten Drehbewegung des Betätigungshebels in die erste Drehrichtung an der radial definierten Umschaltposition dem Fahrzeugführer eine sehr einfache Möglichkeit den Löseschaltzustand zu erzeugen. Durch die zusätzliche funktionale Bedingung, dass sich das Nutzfahrzeug im Stillstand befinden muss, können die Bedienungssicherheit und dadurch bedingt auch die Fahrzeugsicherheit nochmals erhöht werden.

Weiterhin ist möglich, dass der Trailertestschaltzustand aus der dritten Drehbewegung des Betätigungshebels in die erste Drehrichtung ausgehend von seiner radialen Ausgangsposition resultiert, falls der Betätigungshebel an der radialen Umschaltposition angeordnet ist und falls sich die Betätigungseinrichtung im Betätigungsschaltzustand befindet. Um den Trailertestschaltzustand zur intuitiveren Bedienung funktional mit einem ähnlichen Betätigungsmuster zu belegen wie den Betätigungsschaltzustand, ist es besonders vorteilhaft, den Trailertestschaltzustand der ersten Drehbewegung des Betätigungshebels und einer anschließenden Betätigung des Betätigungsknopfs an der radialen Umschaltposition zuzuordnen. Dieser Sachverhalt führt zu einer noch einfacheren und intuitiveren Bedienbarkeit der Betätigungseinrichtung durch den Fahrzeugführer. Durch die funktional abhängige Zuordnung von Trailertestschaltzustand und dem Betätigungsschaltzustand wird zudem wirksam vermieden, dass der Trailertestschaltzustand z.B. ausgehend vom Löseschaltzustand erzeugbar ist, was sich durch eine gesteigerte Fahrzeugsicherheit niederschlägt.

Auch denkbar ist, der graduelle Betätigungsschaltzustand aus einer vierten Drehbewegung des Betätigungshebels in die erste Drehrichtung ausgehend von seiner radialen Ausgangsposition bis maximal an die radiale Umschaltposition resultiert, falls während dieser vierten Drehbewegung des Betätigungshebels keine kontinuierliche Betätigung des Betätigungsknopfs stattfindet und falls sich und falls sich das Nutzfahrzeug im Wesentlichen in einem bewegten Zustand befindet. Der graduelle Betätigungsschaltzustand ist zudem einem graduellen bzw. gestuften Betätigen der elektronischen Parkbremsvorrichtung im bewegten Zustand des Nutzfahrzeugs zugeordnet. Aufgrund des graduellen Betätigens ist die elektronische Parkbremsvorrichtung stets bis zu einem gewissen Grad gelöst. Daher ist der graduelle Betätigungsschaltzustand im Rahmen dieser Erfindung als eine graduelle Erhöhung der Bremswirkung der elektronischen Parkbremsvorrichtung in Abhängigkeit der Auslenkung des Betätigungshebels zu verstehen. Durch das Vorsehen des graduellen Betätigungsschaltzustands an der Betätigungseinrichtung wird für den Fahrer eine besonders komfortable Steuerung der graduellen bzw. gestuften Betätigung der elektronischen Parkbremsvorrichtung zur Verfügung gestellt. Da dieser Schaltzustand nur im bewegten Zustand des Nutzfahrzeugs einnehmbar ist, erhöht sich außerdem die Bediensicherheit sowie die Fahrzeugsicherheit insgesamt.

Zusätzlich ist vorstellbar, dass der graduelle Löseschaltzustand aus einer fünften Drehbewegung des Betätigungshebels in eine zweite Drehrichtung bezogen auf das Aufnahmeelement, ausgehend von einer Winkelposition des Betätigungshebels zwischen radialer Ausgangsposition und radialer Umschaltposition, bis an die radiale Ausgangsposition resultiert, falls während dieser fünften Drehbewegung des Betätigungshebels keine kontinuierliche Betätigung des Betätigungsknopfs stattfindet und falls sich das Nutzfahrzeug im Wesentlichen in einem bewegten Zustand befindet, wobei die zweite Drehrichtung der ersten Drehrichtung entgegengesetzt ist. Der graduelle Löseschaltzustand ist folglich einem graduellen bzw. gestuften Lösen infolge eines graduellen Betätigens der elektronischen Parkbremsvorrichtung im bewegten Zustand des Nutzfahrzeugs zugeordnet. Aufgrund des graduellen Lösens ist die elektronische Parkbremsvorrichtung stets bis zu einem gewissen Grad betätigt. Daher ist der graduelle Löseschaltzustand im Rahmen dieser Erfindung als eine graduelle Erniedrigung der Bremswirkung der elektronischen Parkbremsvorrichtung in Abhängigkeit der Auslenkung des Betätigungshebels zu verstehen. Durch das Vorsehen des graduellen Löseschaltzustands an der Betätigungseinrichtung wird für den Fahrer eine besonders komfortable Steuerung des graduellen bzw. gestuften Lösens der elektronischen Parkbremsvorrichtung zur Verfügung gestellt. Da dieser Schaltzustand nur im bewegten Zustand des Nutzfahrzeugs einnehmbar ist, erhöht sich außerdem die Bediensicherheit sowie die Fahrzeugsicherheit insgesamt.

Weiter kann vorgesehen sein, dass die Streckbremsfunktion in Abhängigkeit einer sechsten Drehbewegung des Betätigungshebels proportional steuerbar ist. Die Betätigungseinrichtung kann in diesem Zusammenhang ein Potentiometer aufweisen. Anhand des Potentiometers kann insbesondere die Streckbremsfunktion in Abhängigkeit der aus der Drehbewegung des Betätigungshebels dessen resultierende Winkelposition besonders einfach der jeweiligen Streckbremsfunktion proportional zugeordnet werden. Daraus ergibt sich für den Fahrzeugführer eine besonders einfach einzustellende bzw. zu dosierende Streckbremsfunktion der elektronischen Parkbremsvorrichtung bzw. Betriebsbremsvorrichtung. Zudem ist es vorstellbar, dass der Betätigungsschaltzustand, Löseschaltzustand und der Trailertestschaltzustand des Betätigungshebels im Wesentlichen im Stillstand des Nutzfahrzeugs einnehmbar sind. Dadurch wird ein unbefugtes Herbeiführen dieser mit der elektronischen Parkbremsvorrichtung in Verbindung stehenden Schaltzustände wirksam verhindert.

Zudem vorstellbar ist, dass wenigstens ein Schaltzustand der Betätigungseinrichtung in Abhängigkeit wenigstens eines weiteren Schaltzustands einer weiteren Betätigungseinrichtung, insbesondere eines Fußpedals, der Betriebsbremsvorrichtung des Fahrzeugs und/oder in Abhängigkeit wenigstens eines Fahrzustands, insbesndere einer Fahrzeuggeschwindigkeit, des Fahrzeugs einnehmbar ist.
Die Abhängigkeit des Schaltzustandes der Betätigungseinrichtung von demjenigen des Fußpedals und von wenigstens einem Fahrzustand ermöglicht eine noch weiter erhöhte Fahrzeugsicherheit. Beispielsweise ist es denkbar, dass der Betätigungsschaltzustand, der Trailertestschaltzustand und der Löseschaltzustand der Betätigungseinrichtung nur unter der Bedingung einnehmbar sind, falls der Fahrzeugführer das Bremspedal betätigt und falls sich das Nutzfahrzeug zusätzlich im Stillstand befindet. Unterlässt der Fahrzeugführer in diesem Fall das Betätigen des Bremspedals, kann er durch ein optisches, akustisches und/oder haptisches Signal darauf aufmerksam gemacht werden.

Des Weiteren ist möglich, dass wenigstens ein Schaltzustand in Abhängigkeit einer Winkelpositionshistorie und einer Drehrichtungshistorie des Betätigungshebels und einer Betätigungshistorie des Betätigungsknopfs einnehmbar ist. Aufgrund des Einbeziehens verschiedener Betätigungshistorien oder häufig wiederkehrender Betätigungsmuster der Betätigungseinrichtung kann die Wahrscheinlichkeit von Fehlbetätigungen durch den Fahrzeugführer weiter gesenkt werden. Zudem kann dadurch die Bedienbarkeit spürbar vereinfacht werden, weil die Betätitungseinrichtung an der radialen Umschaltposition beispielsweise automatisch erkennt, ob z.B. der Betätigungsschaltzustand oder der Löseschaltzustand überhaupt erst eingenommen werden dürfen.

Ferner ist denkbar, dass der graduelle Löseschaltzustand infolge des Einnehmens des Löseschaltzustands solange unterbindbar ist, bis der Betätigungshebel einmal an der radialen Ausgangsposition angeordnet ist. Wenn sich im Fahrzeugstillstand der Betätigungshebel in der radialen Umschaltposition befindet und der Fahrzeugführer den Löseschaltzustand einstellt, würde sich die Parkbremsvorrichtung normalerweise, aufgrund der Drehbewegung des Betätigungshebels zurück zur radialen Ausgangsposition, graduell lösen. Die elektronische Steuerungsvorrichtung der elektronischen Parkbremsvorrichtung erkennt diesen funktionalen Widerspruch allerdings und unterbindet den graduellen Löseschaltzustand solange, bis der Betätigungshebel einmal an der radialen Ausgangsposition angeordnet ist. Folglich kann die Sicherheit und die intuitive Bedienung der Betätigungseinrichtung weiter vorteilhaft verbessert werden.

Ebenfalls ist denkbar, dass die mit der Anordnung des Betätigungshebels an der radialen Umschaltposition zugeordneten Schaltzustände in einem Radialbereich an der radialen Umschaltposition einnehmbar sind. Dadurch lässt sich im alltäglichen Betrieb der Betätigungseinrichtung eine deutliche Vereinfachung der Bedienbarkeit erzielen. Denn der Fahrzeugführer muss nicht bei jedem Zustandswechsel exakt die radiale Umschaltposition treffen, was eine deutliche Erleichterung im Umgang mit der Betätigungseinrichtung darstellt.

Zudem kann vorgesehen sein, dass ein der radialen Umschaltposition abgewandtes Ende des Radialbereichs durch ein elastisches Widerstandselement bezogen auf eine Drehbewegung des Betätigungshebels begrenzt ist. Durch dieses elastische Widerstandselement und den zweiten rotatorischen Anschlag wird der Radialbereich umgrenzt. Das elastische Widerstandselement ist dabei an der kreisförmigen Bewegungsbahn des Betätigungshebels angeordnet und bedarf einer definierten Kraft, um es in beide Drehrichtungen zu überwinden. Das elastische Widerstandselement erlaubt ferner eine eindeutige Eingrenzung des Radialbereichs, sodass der Fahrzeugführer immer exakt weist, wann sich der Betätigungshebel innerhalb oder außerhalb dieses Radialbereichs befindet. Dieses Wissen erleichtert dem Fahrzeugführer die Handhabung der Betätigungseinrichtung deutlich, sodass Fehlbedienungen weiter wirksam vermieden werden können.

Außerdem ist denkbar, dass die Betätigungseinrichtung wenigstens eine Beleuchtungseinrichtung und wenigstens ein Symbol umfasst, die einen jeweiligen Schaltzustand der Betätigungseinrichtung und einen jeweiligen Betriebszustand der elektronischen Parkbremsvorrichtung und/oder der elektronischen Betriebsbremsvorrichtung anzeigen, wobei die Beleuchtungseinrichtung und/oder das Symbol an dem Betätigungshebel und an dem Aufnahmeelement angebracht sind, und wobei das Symbol mittels wenigstens einer weiteren Beleuchtungseinrichtung beleuchtbar ist. Zum einen wird dadurch eine noch eindeutigere Zuordnung der jeweiligen Schaltzustände der Betätigungseinrichtung mit dem entsprechenden Betriebszustand der elektronischen Parkbrems- und Betriebsbremsvorrichtung ermöglicht. Zum anderen kann es für eine Vereinfachung der, insbesondere manuellen, Betätigung außerordentlich wichtig sein, den Betriebszustand der elektronischen Parkbremsvorrichtung an der Betätigungseinrichtung für den Fahrzeugführer optisch anzuzeigen. Im Übrigen kann es kann es für eine Vereinfachung der, insbesondere manuellen, Betätigung außerordentlich wichtig sein, den Betriebszustand der elektronischen Parkbremsvorrichtung und/oder der Betriebsbremsvorrichtung an der Betätigungseinrichtung für den Fahrzeugführer optisch anzuzeigen. Das Beleuchten des Symbols mittels einer weiteren Beleuchtungseinrichtung ist insbesondere unter verdunkelten Umgebungsbedingungen des Nutzfahrzeugs (z.B. bei einer Nachtfahrt) vorteilhaft.

Für eine besonders vorteilhafte Betätigung des Betätigungshebels durch einen Fahrzeugführer ist die jeweilige vorstehend beschriebene Drehbewegung in die erste Drehrichtung als ziehende Drehbewegung ausgebildet. Zudem ist für eine besonders vorteilhafte Betätigung des Betätigungshebels durch einen Fahrzeugführer die jeweilige Drehbewegung in die zweite Drehrichtung als drückende Drehbewegung ausgebildet. Die jeweilige Drehbewegung in die erste bzw. zweite Drehrichtung kann allerdings auch genau umgekehrt sprich als drückende bzw. ziehende Drehbewegung ausgebildet sein. Bezüglich dieser umgekehrten Zuordnung der jeweiligen Drehbewegungen weisen sodann auch alle radialen Anschläge und Schaltzustände eine entsprechend umgekehrte Zuordnung auf.

Weitere Einzelheiten und Vorteile der Erfindung sollen nun anhand eines in den Figuren dargestellten Ausführungsbeispiels näher erläutert werden.

Es zeigen:
- Fig. 1: eine schematische perspektivische Ansicht eines Ausführungsbeispiels einer erfindungsgemäßen Betätigungseinrichtung sowie einer erfindungsgemäßen elektronischen Parkbremsvorrichtung; und
- Fig. 2: eine weitere schematische perspektivische Darstellung des Ausführungsbeispiels der Betätigungseinrichtung gemäß Fig. 1.

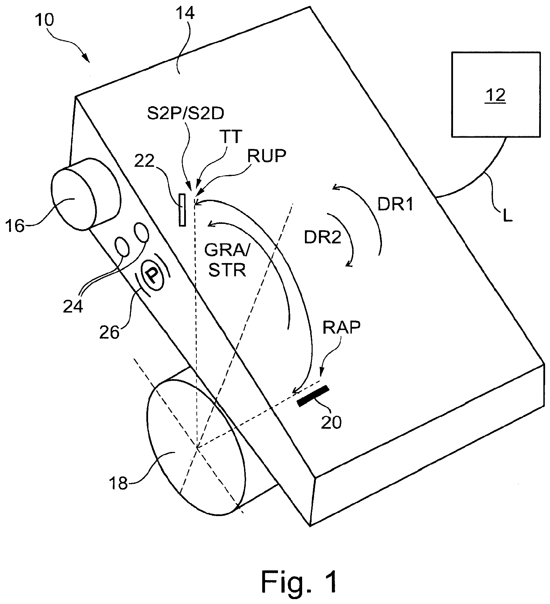

**Fig. 1** zeigt eine schematische perspektivische Ansicht eines Ausführungsbeispiels einer erfindungsgemäßen Betätigungseinrichtung 10 sowie einer erfindungsgemäßen elektronischen Parkbremsvorrichtung 12.

Die strukturellen Merkmale der erfindungsgemäßen Betätigungseinrichtung 10 sind gemäß Fig. 1 in einem hohen Schematisierungsgrad dargestellt und sollen insbesondere dazu dienen, die Funktion der Betätigungseinrichtung 10 besser zu veranschaulichen.

Sie sind weder als konkrete konstruktive Ausgestaltungen noch als maßstäblich zu verstehen.

Die Betätigungseinrichtung 10 ist mittels einer Leitung L mit der elektronischen Parkbremsvorrichtung 12 verbunden.

Die Betätigungseinrichtung 10 ist als Kippschalter ausgebildet.

Im Übrigen ist es vorstellbar, dass die Betätigungseinrichtung 10 als Schwenkschalter oder Wippschalter ausgebildet ist.

Die Betätigungseinrichtung 10 weist einem Betätigungshebel 14 auf, der wiederum einen Betätigungsknopf 16 umfasst.

Ferner weist die Betätigungseinrichtung 10 ein Aufnahmeelement 18 auf.

Dabei sind der Betätigungshebel 14 und das Aufnahmeelement 18 drehbar miteinander verbunden und um eine Drehachse relativ zueinander verdrehbar.

Der Betätigungshebel 14 weist folglich ein drehbar gelagertes Ende und ein freies Ende auf.

Der Betätigungshebel 14 ist folglich mittels des drehbar gelagerten Endes an dem Aufnahmeelement 18 drehbar gelagert.

Im Bereich des freien Endes des Betätigungshebels 14 ist der Betätigungsknopf 16 angeordnet.

Der Betätigungsknopf 16 ist als gefedert monostabiler Betätigungsknopf 16 in Form eines Drucktasters ausgebildet.

Ebenfalls denkbar ist, dass der Betätigungsknopf 16 als gefedert monostabiler Schiebeschalter oder als bistabiler Schiebeschalter ausgebildet ist.
Die Betätigungseinrichtung 10 umfasst zudem einen ersten rotatorischen Anschlag 20, einen zweiten rotatorischen Anschlag 22, eine radiale Umschaltposition RUP und eine radiale Ausgangsposition RAP.

Der erste rotatorische Anschlag 20, der zweite rotatorische Anschlag 22, die radiale Umschaltposition RUP und die radiale Ausgangsposition RAP sind entlang eines kreisförmigen Bahnkurvenabschnitts angeordnet.

Gemäß Fig. 1 ist der Betätigungshebel 18 in einer Winkelposition zwischen radialer Umschaltposition RUP und radialer Ausgangsposition RAP angeordnet.

Der kreisförmige Bahnkurvenabschnitt wird durch eine entsprechende kreisförmige Nut in einem Gehäuse (nicht in Fig. 1 gezeigt) des Aufnahmeelements 18 ausgebildet.

Die radiale Ausgangsposition RAP ist an dem ersten rotatorischen Anschlag 20 angeordnet und die radiale Umschaltposition RUP ist dem zweiten rotatorischen Anschlag 22 angeordnet.

Der erste rotatorische Anschlag 20, der zweite rotatorische Anschlag 22, die radiale Umschaltposition RUP und die radiale Ausgangsposition RAP sind folglich an dem Aufnahmeelement angeordnet.

Gemäß Fig. 1 umfasst die Betätigungseinrichtung 10 zwei Beleuchtungseinrichtungen 24 und ein Symbol 26.

Die Beleuchtungseinrichtungen 24 und das Symbol 26 sind an dem Betätigungshebel 14 angebracht.

Allerdings ist es genau so gut möglich, dass die Beleuchtungseinrichtungen 24 und das Symbol 26 an dem Aufnahmeelement 18 angebracht sind.

Die Funktion der Betätigungseinrichtung 10 lässt sich nun folgendermaßen beschreiben:
Die Betätigungseinrichtung 10 dient insbesondere zum Steuern einer elektronischen Parkbremsvorrichtung 12 eines Nutzfahrzeugs.

Die verschiedenen im Rahmen dieser Erfindung offenbarten Betriebszustände der elektronischen Parkbremsvorrichtung 12 können so in Antwort auf die von der Betätigungseinrichtung 10 erzeugten Steuersignale gesteuert werden.

Die Steuersignale können von einer elektronischen Steuerungseinheit der elektronischen Parkbremsvorrichtung 12 zu entsprechenden Steuerungsbefehlen verarbeitet werden, wodurch die entsprechenden Betriebszustände ausgeführt werden.

Die Betätigungseinrichtung 10 umfasst dazu einen Betätigungsschaltzustand S2P und einen Löseschaltzustand S2P.

Infolgedessen resultiert der Betätigungsschaltzustand S2P aus einer ersten Drehbewegung des Betätigungshebels 14 in eine erste Drehrichtung DR1 bezogen auf das Aufnahmeelement 18 und aus einer ersten Betätigung des Betätigungsknopfes 16.

Der Löseschaltzustand S2D resultiert entsprechend aus einer zweiten Drehbewegung des Betätigungshebels 14 in die erste Drehrichtung DR1 bezogen auf das Aufnahmeelement 18 und aus einer zweiten Betätigung des Betätigungsknopfes 16, falls der Betätigungshebel 14 an der radialen Ausgangsposition RAP angeordnet ist.

Gemäß Fig. 1 ist der Betätigungsschaltzustand S2P und der Löseschaltzustand S2D an dem zweiten rotatorischen Anschlag 22 bzw. an der radialen Umschaltposition RUP angeordnet.

Demnach resultiert der Betätigungsschaltzustand S2P aus der ersten Betätigung des Betätigungsknopfes 16 infolge der ersten Drehbewegung des Betätigungshebels 14 in die erste Drehrichtung DR1 ausgehend von seiner radialen Ausgangsposition RAP, falls der Betätigungshebel 14 an der radialen Umschaltposition RUP angeordnet ist und falls sich das Nutzfahrzeug im Stillstand befindet.

Der Betätigungsschaltzustand S2P ist jedoch zudem nur einnehmbar, falls sich die Betätigungseinrichtung 10 im Löseschaltzustand S2D befindet.

Der Löseschaltzustand S2D resultiert folglich aus der zweiten Betätigung des Betätigungsknopfes 16 infolge der zweiten Drehbewegung des Betätigungshebels 14 in die erste Drehrichtung DR1 ausgehend von seiner radialen Ausgangsposition RAP, falls der Betätigungshebel 14 an der radialen Umschaltposition RUP angeordnet ist und falls sich das Nutzfahrzeug im Stillstand befindet.

Der Löseschaltzustand S2D ist allerdings nur einnehmbar, falls sich die Betätigungseinrichtung 10 im Betätigungsschaltzustand S2P befindet.

Der Betätigungsschaltzustand S2P ist somit einem Betätigen der Parkbremsvorrichtung 12 zugeordnet, wohingegen der Löseschaltzustand S2D einem Lösen der Parkbremsvorrichtung 12 zugeordnet ist.

Die erste und zweite Betätigung des Betätigungsknopfs 16 erfolgt jeweils durch eine kurze bzw. temporäre Drucktastbewegung durch den Fahrzeugführer.

Daraufhin wird nach Erreichen eines gewissen axialen Betätigungsweges bzw. axialen Betätigungsbereichs der entsprechende Schaltzustand der Betätigungseinrichtung 10 herbeigeführt.

Jedoch weist die Betätigungseinrichtung 10 entsprechend der Fig. 1 weitere Schaltzustände als den Betätigungsschaltzustand S2P und den Löseschaltzustand S2D auf.

Ein weiterer Schaltzustand, den die Betätigungseinrichtung 10 aufweist, ist ein Trailertestschaltzustand TT.

Der Trailertestschaltzustand TT resultiert aus einer dritten Drehbewegung des Betätigungshebels 14 in die erste Drehrichtung DR1 bezogen auf das Aufnahmeelement 18.

Der Trailertestschaltzustand TT ist einer Trailertestfunktion der elektronischen Parkbremsvorrichtung 12 zugeordnet ist.

Insbesondere resultiert der Trailertestschaltzustand TT aus der dritten Drehbewegung des Betätigungshebels 14 in die erste Drehrichtung DR1 ausgehend von seiner radialen Ausgangsposition RAP.

Der Trailertestschaltzustand TT ist jedoch nur einnehmbar, falls der Betätigungshebel 14 an der radialen Umschaltposition RUP angeordnet ist und falls sich die Betätigungseinrichtung 10 im Betätigungsschaltzustand S2P befindet.

Möchte der Fahrzeugführer den Trailertestschaltzustand TT wieder deaktivieren, so überführt er den Betätigungshebel erneut in die radiale Umschaltposition RUP und betätigt den Betätigungsknopf erneut.

Aus Sicherheitsgründen sind der Betätigungsschaltzustand S2P, der Löseschaltzustand S2D und der Trailertestschaltzustand TT der Betätigungseinrichtung 10 lediglich im Stillstand des Nutzfahrzeugs einnehmbar.

Der Betätigungsschaltzustand S2P, der Löseschaltzustand S2D und der Trailertestschaltzustand TT der Betätigungseinrichtung 10 sind ferner in Abhängigkeit eines weiteren Schaltzustands eines Fußpedals der elektronischen Betriebsbremsvorrichtung des Fahrzeugs einnehmbar.

So können diese Schaltzustände z.B. nur unter der Bedingung eines betätigten Fußpedals der elektronischen Betriebsbremsvorrichtung eingenommen werden.

Des Weiteren können die mit der Anordnung des Betätigungshebels 14 an der radialen Umschaltposition RUP zugeordneten Schaltzustände: Betätigungsschaltzustand S2P, Löseschaltzustand S2D und Trailertestschaltzustand TT in einem Radialbereich an der radialen Umschaltposition RUP einnehmbar sein.

Ein der radialen Umschaltposition RUP abgewandtes Ende des Radialbereichs wird zusätzlich durch ein elastisches Widerstandselement bezogen auf eine Drehbewegung des Betätigungshebels 14 begrenzt.

Die Betätigungseinrichtung 10 weist im Übrigen einen graduellen Schaltzustand GRA auf, durch den ein gradueller Betätigungsschaltzustand und ein gradueller Löseschaltzustand einstellbar ist.

Der graduelle Betätigungsschaltzustand ist dabei einem graduellen Betätigen der elektronischen Parkbremsvorrichtung zugeordnet, während der graduelle Löseschaltzustand einem graduellen Lösen der elektronischen Parkbremsvorrichtung zugeordnet ist.

Der graduelle Betätigungsschaltzustand resultiert aus einer vierten Drehbewegung des Betätigungshebels 14 in die erste Drehrichtung DR1 ausgehend von seiner radialen Ausgangsposition RAP bis maximal an die radiale Umschaltposition RUP.

Der graduelle Betätigungsschaltzustand ist allerdings nur einnehmbar, falls während dieser vierten Drehbewegung des Betätigungshebels 14 keine kontinuierliche Betätigung des Betätigungsknopfs 16 stattfindet und falls sich das Nutzfahrzeug in einem bewegten Zustand befindet.

Ferner ist der graduelle Betätigungsschaltzustand nur dann einnehmbar, falls sich die Betätigungseinrichtung 10 im Löseschaltzustand S2D befindet.

Der graduelle Löseschaltzustand wiederum resultiert aus einer fünften Drehbewegung des Betätigungshebels 14 in eine zweite Drehrichtung DR2 bezogen auf das Aufnahmeelement 18, ausgehend von einer Winkelposition des Betätigungshebels 14 zwischen radialer Ausgangsposition RAP und radialer Umschaltposition RUP, bis an die radiale Ausgangsposition RAP.

Der graduelle Löseschaltzustand ist allerdings nur einnehmbar, falls während dieser fünften Drehbewegung des Betätigungshebels 14 keine kontinuierliche Betätigung des Betätigungsknopfs 16 stattfindet und falls sich das Nutzfahrzeug in einem bewegten Zustand befindet, wobei die zweite Drehrichtung DR2 der ersten Drehrichtung DR1 entgegengesetzt ist.

Ferner ist der graduelle Löseschaltzustand nur dann einnehmbar, falls sich die Betätigungseinrichtung 10 im Löseschaltzustand S2D befindet.

Folglich wird an der radialen Ausgangsposition RAP keine Bremswirkung durch die elektronische Parkbremsvorrichtung 12 erzeugt, wohingegen an der radialen Umschaltposition RUP deren maximale Bremswirkung erzeugt wird.

Die Betätigungseinrichtung 10 ist zusätzlich zum Steuern einer elektronischen Betriebsbremsvorrichtung des Fahrzeugs eingerichtet.

Dazu weist die Betätigungseinrichtung 10 einen Streckbremsschaltzustand STR auf, der einer Streckbremsfunktion der Betriebsbremsvorrichtung zugeordnet ist.

Jedoch kann die Streckbremsfunktion neben der elektronischen Betriebsbremsvorrichtung des Nutzfahrzeugs, bzw. insbesondere dessen Anhänge- oder Aufliegerfahrzeug, auch zusätzlich mittels der elektronischen Parkbremsvorrichtung 12 durchgeführt werden, welche in diesem Fall als Hilfsbremsvorrichtung dient.

Der Streckbremsschaltzustand STR resultiert aus einer sechsten Drehbewegung des Betätigungshebels 14 in die erste Drehrichtung DR1 ausgehend von seiner radialen Ausgangsposition RAP bis maximal an die radiale Umschaltposition RUP
Folglich wird an der radialen Ausgangsposition RAP keine Streckbremswirkung erzeugt, wohingegen an der radialen Umschaltposition RUP die maximale Streckbremswirkung erzeugt wird.

Der Streckbremsschaltzustand STR ist allerdings nur einnehmbar, falls während dieser sechsten Drehbewegung des Betätigungshebels 14 eine kontinuierliche Betätigung des Betätigungsknopfs 16 stattfindet und falls sich das Nutzfahrzeug in einem bewegten Zustand befindet.

Ferner ist der Streckbremsschaltzustand STR nur dann einnehmbar, falls sich die Betätigungseinrichtung 10 im Löseschaltzustand S2D befindet.

Möchte der Fahrzeugführer den Streckbremsschaltzustand STR wieder deaktivieren, so führt er eine weitere Drehbewegung des Betätigungshebels 14 bei kontinuierlich betätigtem Betätigungsknopf 16 ausgehend von seiner aktuellen Winkelposition in die zweite Drehrichtung DR2 bis zur radialen Ausgangsposition RAP aus.

Die Drehbewegungen des Betätigungshebels 14 sind als Kippbewegungen ausgebildet.

Ferner können die Drehbewegungen des Betätigungshebels 14 auch als Schwenkbewegungen ausgebildet sein.

Die vorstehend erläuterten Schaltzustände S2P, S2D, TT, GRA, STR der Betätigungseinrichtung 10 können ferner in Abhängigkeit eines weiteren Schaltzustands eines Fußpedals der elektronischen Betriebsbremsvorrichtung des Fahrzeugs einnehmbar sein.

So können diese Schaltzustände S2P, S2D, TT, GRA, STR ferner in Abhängigkeit einer Winkelpositionshistorie und einer Drehrichtungshistorie des Betätigungshebels 14 sowie einer Betätigungshistorie des Betätigungsknopfs 16 einnehmbar sein.

Somit können diese Schaltzustände S2P, S2D, TT, GRA, STR beispielsweise in Abhängigkeit einer Fahrzeuggeschwindigkeit des Nutzfahrzeugs einnehmbar sein.

Ferner ist diesbezüglich denkbar, dass der graduelle Löseschaltzustand infolge des Einnehmens des Löseschaltzustands S2D solange unterbindbar ist, bis der Betätigungshebel 14 einmal an der radialen Ausgangsposition RAP angeordnet ist.

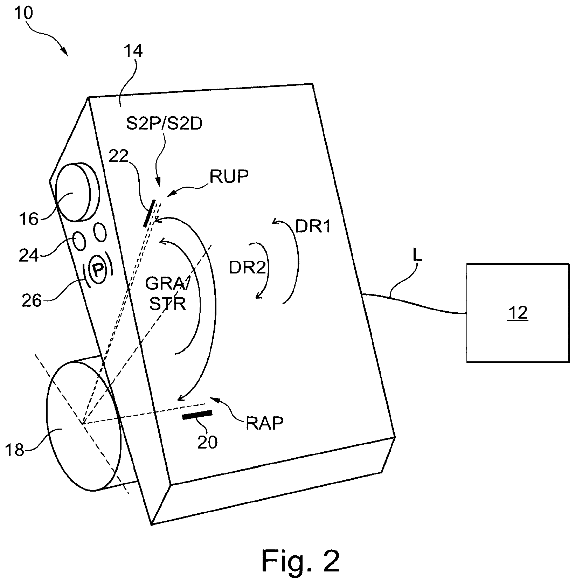

Fig. 2 zeigt diesbezüglich eine weitere schematische perspektivische Darstellung des Ausführungsbeispiels der Betätigungseinrichtung 10.

Der Betätigungshebel 14 ist gemäß Fig. 2 bei betätigtem Betätigungsknopf 16 an der radialen Umschaltposition RUP angeordnet.

Gemäß dieser Winkelposition des Betätigungshebels 14 kann die Betätigungseinrichtung 10 beispielsweise die der radialen Umschaltposition RUP direkt zugeordneten Schaltzustände: Betätigungsschaltzustand S2P, Löseschaltzustand S2D und Trailertestschaltzustand TT einnehmen.

Um den Betätigungshebel 14 von der radialen Ausgangsposition RAP in die radiale Umschaltposition RUP zu verdrehen bzw. zu verschwenken, sollte der Betätigungshebel 14 gezogen werden können.

Um den Betätigungshebel 14 automatisch in die radiale Ausgangsposition RAP überführen zu können, weist die Betätigungseinrichtung 10 eine Drehfeder auf.

Das gemäß den Fig. 1 und 2 gezeigte Ausführungsbeispiel der Betätigungseinrichtung 10 weist zudem zwei Beleuchtungseinrichtungen 24 und ein Symbol 26 auf.

Diese zeigen den jeweiligen Betriebszustand der elektronischen Parkbremsvorrichtung 12 oder der elektronischen Betriebsbremsvorrichtung an.

So ist es beispielsweise denkbar, dass die beiden Beleuchtungseinrichtungen 24 als rote und grüne LEDs ausgebildet sind, wobei die grüne LED im Falle des Löseschaltzustands S2D und die rote LED im Falle des Betätigungsschaltzustands S2P aufleuchtet.

Für den Fall des Betätigungsschaltzustands S2P ist das Symbol 26 mittels einer weiteren Beleuchtungseinrichtung (nicht in Fig. 1 und 2 gezeigt) beleuchtbar.

### BEZUGSZEICHENLISTE

- 10: Betätigungseinrichtung
- 12: Parkbremsvorrichtung
- 14: Betätigungshebel
- 16: Betätigungsknopf
- 18: Aufnahmeelement
- 20: erster rotatorischer Anschlag
- 22: zweiter rotatorischer Anschlag
- 24: Beleuchtungseinrichtung
- 26: Symbol

- L: Leitung
- S2P: Betätigungsschaltzustand
- S2D: Löseschaltzustand
- DR1: erste Drehrichtung
- DR2: zweite Drehrichtung
- TT: Trailertestschaltzustand
- STR: Streckbremsschaltzustand
- GRA: gradueller Schaltzustand
- RAP: radiale Ausgangsposition
- RUP: radiale Umschaltposition

## Patentansprüche

1. Betätigungseinrichtung (10) zum Steuern einer, insbesondere elektronischen, Parkbremsvorrichtung (12) eines Fahrzeugs, insbesondere eines Nutzfahrzeugs, mit wenigstens einem Betätigungshebel (14), wobei der Betätigungshebel (14) wenigstens einen Betätigungsknopf (16) aufweist, und mit wenigstens einem Aufnahmeelement (18), wobei der Betätigungshebel (14) und das Aufnahmeelement (18) drehbar miteinander verbunden sind und um eine Drehachse relativ zueinander verdrehbar sind, wobei die Betätigungseinrichtung (10) wenigstens einen Betätigungsschaltzustand (S2P) und wenigstens einen Löseschaltzustand (S2D) aufweist, wobei der Betätigungsschaltzustand (S2P) wenigstens aus einer ersten Drehbewegung des Betätigungshebels (14) in eine erste Drehrichtung (DR1) bezogen auf das Aufnahmeelement (18) und einer ersten Betätigung des Betätigungsknopfes (16) resultiert und **dadurch gekennzeichnet, dass** der Löseschaltzustand wenigstens aus einer zweiten Drehbewegung des Betätigungshebels (14) in die erste Drehrichtung (DR1) bezogen auf das Aufnahmeelement (18) und einer zweiten Betätigung des Betätigungsknopfes (16) resultiert, wobei der Betätigungsschaltzustand (S2P) einem Betätigen der Parkbremsvorrichtung (12) zugeordnet ist und wobei der Löseschaltzustand (S2D) einem Lösen der Parkbremsvorrichtung (12) zugeordnet ist.

2. Betätigungseinrichtung (10) nach Anspruch 1,
**dadurch gekennzeichnet, dass**
die Betätigungseinrichtung (10) einen Trailertestschaltzustand (TT) aufweist, wobei der Trailertestschaltzustand (TT) wenigstens aus einer dritten Drehbewegung des Betätigungshebels (14) in die erste Drehrichtung (DR1) bezogen auf das Aufnahmeelement (18) resultiert, und wobei der Trailertestschaltzustand (TT) einer Trailertestfunktion der Parkbremsvorrichtung (12) zugeordnet ist.

3. Betätigungseinrichtung (10) nach einem der vorhergehenden Ansprüche,
**dadurch gekennzeichnet, dass**
die Betätigungseinrichtung (10) wenigstens einen graduellen Schaltzustand (GRA) aufweist, durch den ein gradueller Betätigungsschaltzustand und/oder ein gradueller Löseschaltzustand einstellbar ist.

4. Betätigungseinrichtung (10) nach einem der vorhergehenden Ansprüche,
**dadurch gekennzeichnet, dass**
die Betätigungseinrichtung (10) wenigstens einen ersten rotatorischen Anschlag (20), wenigstens einen zweiten rotatorischen Anschlag (22), wenigstens eine radiale Umschaltposition (RUP) und wenigstens eine radiale Ausgangsposition (RAP) aufweist, welche entlang eines kreisförmigen Bahnkurvenabschnitts angeordnet sind, wobei die radiale Ausgangsposition (RAP) an dem ersten rotatorischen Anschlag (20) angeordnet ist und wobei die radiale Umschaltposition (RUP) dem zweiten rotatorischen Anschlag (22) angeordnet ist.

5. Betätigungseinrichtung (10) nach einem der vorhergehenden Ansprüche,
**dadurch gekennzeichnet, dass**
der Betätigungsschaltzustand (S2P) aus der ersten Betätigung des Betätigungsknopfes (16) infolge der ersten Drehbewegung des Betätigungshebels (14) in die erste Drehrichtung (DR1) ausgehend von seiner radialen Ausgangsposition (RAP) resultiert, falls der Betätigungshebel (14) an der radialen Umschaltposition (RUP) angeordnet ist und falls sich das Nutzfahrzeug im Wesentlichen im Stillstand befindet.

6. Betätigungseinrichtung (10) nach einem der vorhergehenden Ansprüche,
**dadurch gekennzeichnet, dass**
der Löseschaltzustand (S2D) aus der zweiten Betätigung des Betätigungsknopfes (16) infolge der zweiten Drehbewegung des Betätigungshebels (14) in die erste Drehrichtung (DR1) ausgehend von seiner radialen Ausgangsposition (RAP) resultiert, falls der Betätigungshebel (14) an der radialen Umschaltposition (RUP) angeordnet ist und falls sich das Nutzfahrzeug im Wesentlichen im Stillstand befindet.

7. Betätigungseinrichtung (10) nach einem der vorhergehenden Ansprüche, in Kombination mit Anspruch 2,
**dadurch gekennzeichnet, dass**
der Trailertestschaltzustand (TT) aus der dritten Drehbewegung des Betätigungshebels (14) in die erste Drehrichtung (DR1) ausgehend von seiner radialen Ausgangsposition (RAP) resultiert, falls der Betätigungshebel (14) an der radialen Umschaltposition (RUP) angeordnet ist und falls sich die Betätigungseinrichtung (10) im Betätigungsschaltzustand (S2P) befindet.

8. Betätigungseinrichtung (10) nach einem der vorhergehenden Ansprüche,
**dadurch gekennzeichnet, dass**
der graduelle Betätigungsschaltzustand aus einer vierten Drehbewegung des Betätigungshebels (14) in die erste Drehrichtung (DR1) ausgehend von seiner radialen Ausgangsposition (RAP) bis maximal an die radiale Umschaltposition (RUP) resultiert, falls während dieser vierten Drehbewegung des Betätigungshebels (14) keine kontinuierliche Betätigung des Betätigungsknopfs (16) stattfindet und falls sich und falls sich das Nutzfahrzeug im Wesentlichen in einem bewegten Zustand befindet.

9. Betätigungseinrichtung (10) nach einem der vorhergehenden Ansprüche,
**dadurch gekennzeichnet, dass**
der graduelle Löseschaltzustand aus einer fünften Drehbewegung des Betätigungshebels (14) in eine zweite Drehrichtung (DR2) bezogen auf das Aufnahmeelement (18), ausgehend von einer Winkelposition des Betätigungshebels (14) zwischen radialer Ausgangsposition (RAP) und radialer Umschaltposition (RUP), bis an die radiale Ausgangsposition (RAP) resultiert, falls während dieser fünften Drehbewegung des Betätigungshebels (14) keine kontinuierliche Betätigung des Betätigungsknopfs (16) stattfindet und falls sich das Nutzfahrzeug im Wesentlichen in einem bewegten Zustand befindet, wobei die zweite Drehrichtung (DR2) der ersten Drehrichtung (DR1) entgegengesetzt ist.

10. Betätigungseinrichtung (10) nach einem der vorhergehenden Ansprüche,
**dadurch gekennzeichnet, dass**
wenigstens ein Schaltzustand (S2P, S2D, TT, GRA) der Betätigungseinrichtung (10) in Abhängigkeit wenigstens eines weiteren Schaltzustands einer weiteren Betätigungseinrichtung, insbesondere eines Fußpedals, der Betriebsbremsvorrichtung des Nutzfahrzeugs und/oder in Abhängigkeit wenigstens eines Fahrzustands, insbesondere einer Fahrzeuggeschwindigkeit, des Nutzfahrzeugs einnehmbar ist.

11. Betätigungseinrichtung (10) nach einem der vorhergehenden Ansprüche,
**dadurch gekennzeichnet, dass**
wenigstens ein Schaltzustand (S2P, S2D, TT, GRA) in Abhängigkeit einer Winkelpositionshistorie und einer Drehrichtungshistorie des Betätigungshebels (14) und einer Betätigungshistorie des Betätigungsknopfs (16) einnehmbar ist.

12. Betätigungseinrichtung (10) nach Anspruch 11,
**dadurch gekennzeichnet, dass**
der graduelle Löseschaltzustand infolge des Einnehmens des Löseschaltzustands (S2D) solange unterbindbar ist, bis der Betätigungshebel (14) einmal an der radialen Ausgangsposition (RAP) angeordnet ist.

13. Betätigungseinrichtung (10) nach einem der vorhergehenden Ansprüche,
**dadurch gekennzeichnet, dass**
die mit der Anordnung des Betätigungshebels (14) an der radialen Umschaltposition (RUP) zugeordneten Schaltzustände (S2D, S2P, TT) in einem Radialbereich an der radialen Umschaltposition (RUP) einnehmbar sind.

14. Betätigungseinrichtung (10) nach Anspruch 13,
**dadurch gekennzeichnet, dass**
ein der radialen Umschaltposition (RUP) abgewandtes Ende des Radialbereichs durch ein elastisches Widerstandselement bezogen auf eine Drehbewegung des Betätigungshebels (14) begrenzt ist.

15. Betätigungseinrichtung (10) nach einem der vorhergehenden Ansprüche,
**dadurch gekennzeichnet, dass**
die Betätigungseinrichtung (10) wenigstens eine Beleuchtungseinrichtung (24) und wenigstens ein Symbol (26) umfasst, die den jeweiligen Schaltzustand der Betätigungseinrichtung und einen jeweiligen Betriebszustand der elektronischen Parkbremsvorrichtung (12) und/oder der elektronischen Betriebsbremsvorrichtung anzeigen, wobei die Beleuchtungseinrichtung (24) und/oder das Symbol (26) an dem Betätigungshebel (14) und an dem Aufnahmeelement (18) angebracht sind und wobei das Symbol (26) mittels wenigstens einer weiteren Beleuchtungseinrichtung beleuchtbar ist.

## Claims

1. Actuation device (10) for the control of an in particular electronic parking brake device (12) of a vehicle, in particular a utility vehicle, with at least one actuation lever (14), wherein the actuation lever (14) has at least one actuating button (16), and with at least one receiving element (18), wherein the actuation lever (14) and the receiving element (18) are connected rotatably with one another and can rotate relative to one another about a rotation axis. wherein the actuation device (10) has at least one actuation switching condition (S2P) and at least one release switching condition (S2D), wherein the actuation switching condition (S2P) results at least from a first rotation movement of the actuation lever (14) in a first rotation direction (DR1) relative to the receiving element (18) and a first actuation of the actuation button (16),
**characterised in that**
the release switching condition results at least from a second rotation movement of the actuation lever (14) in the first rotation direction (DR1) relative to the receiving element (18) and a second actuation of the actuation button (16), wherein the actuation switching condition (S2P) is associated with the actuation of the parking brake device (12) and wherein the release switching condition (S2D) is associated with the release of the parking brake device (12).

2. Actuation device (10) according to Claim 1,
**characterised in that**
the actuation device (10) has a trailer test switching condition (TT), wherein the trailer test switching condition (TT) results at least from a third rotation movement of the actuation lever (14) in the first rotation direction (DR1) relative to the receiving element (18), and wherein the trailer test switching condition (TT) is associated with a trailer test function of the parking brake device (12).

3. Actuation device (10) according to either of the preceding Claims,
**characterised in that**
the actuation device (10) has at least one gradual shifting condition (GRA), by means of which a gradual actuation switching condition and/or a gradual release switching condition can be obtained.

4. Actuation device (10) according to any of the preceding claims,
**characterised in that**
the actuation device (10) has at least one first rotational stop (20), at least one second rotational stop (22), at least one radial switchover position (RUP) and at least one radial starting position (RAP), which are arranged along a circular-path curved section, such that the radial starting position (RAP) is located at the first rotational stop (20) and the radial switchover position (RUP) is located at the second rotational stop (22).

5. Actuation device (10) according to any of the preceding claims,
**characterised in that**
the actuation switching condition (S2P) is produced by the first actuation of the actuation button (18) as a result of the first rotation movement of the actuation lever (14) in the first rotation direction (DR1) beginning from its radial starting position (RAP), if the actuation lever (14) is positioned at the radial switchover position (RUP) and if the utility vehicle is essentially at a standstill.

6. Actuation device (10) according to any of the preceding claims,
**characterised in that**
the release switching condition (S2D) is produced by the second actuation of the actuation button (18) as a result of the second rotation movement of the actuation lever (14) in the first rotation direction (DR1) beginning from its radial starting position (RAP), if the actuation lever (14) is positioned at the radial switchover position (RUP) and if the utility vehicle is essentially at a standstill.

7. Actuation device (10) according to any of the preceding claims in combination with Claim 2,
**characterised in that**
the trailer test switching condition (TT) is produced by the third rotation movement of the actuation lever (14) in the first rotation direction (DR1) beginning at its radial starting position (RAP), if the actuation lever (14) is positioned at the switchover position (RUP) and if the actuation device (10) is in the actuation switching condition (S2P).

8. Actuation device (10) according to any of the preceding claims,
**characterised in that**
the gradual actuation switching condition is produced by a fourth rotation movement of the actuation lever (14) in the first rotation direction (DR1) beginning from its radial starting position (RAP), at most as far as the radial switchover position (RUP), if during this fourth rotation movement of the actuation lever (14) there is no continuous actuation of the actuation button (16) and if the utility vehicle is essentially in a moving condition.

9. Actuation device (10) according to any of the preceding claims,
**characterised in that**
the gradual release switching condition is produced by a fifth rotation movement of the actuation lever (14) in a second rotation direction (DR2) relative to the receiving element (18), beginning from an angular position of the actuation lever (14) between the radial starting position (RAP) and the radial switchover position (RUP), as far as the radial starting position (RAP), if during this fifth rotation movement of the actuation lever (14) there is no continuous actuation of the actuation button (16) and if the utility vehicle is essentially in a moving condition, wherein the second rotation direction (DR2) is opposite to the first rotation direction (DR1).

10. Actuation device (10) according to any of the preceding claims,
**characterised in that**
at least one switching condition (S2P, S2D, TT, GRA) of the actuation device (10) can be adopted as a function of at least one further switching condition of a further actuation device, in particular a foot-pedal of the service brake mechanism of the utility vehicle and/or as a function of at least one vehicle condition, in particular a driving speed of the utility vehicle.

11. Actuation device (10) according to any of the preceding claims,
**characterised in that**
at least one switching condition (S2P, S2D, TT, GRA) can be adopted as a function of an angular position and a rotation direction history of the actuation lever (14) and an actuation history of the actuation button (16).

12. Actuation device (10) according to Claim 11,
**characterised in that**
the gradual release switching condition resulting from the adoption of the release switching condition (S2D) can be suppressed until the actuation lever (14) is first arranged at the radial starting position (RAP).

13. Actuation device (10) according to any of the preceding claims,
**characterised in that**
the switching conditions (S2D, S2P, TT) associated with the positioning of the actuation lever (14) at the radial switchover position (RUP) can be adopted within a radial range at the radial switchover position (RUP).

14. Actuation device (10) according to Claim 13,
**characterised in that**
an end of the radial range remote from the radial switchover position (RUP) is limited by an elastic resistance element in relation to a rotation movement of the actuation lever (14).

15. Actuation device (10) according to any of the preceding claims,
**characterised in that**
the actuation device (10) comprises at least one illumination device (24) and at least one symbol (26), which indicate the respective switching condition of the actuation device (10) and a respective operating condition of the electronic parking brake device (12) and/or the electronic service brake mechanism, wherein the illumination device (24) and/or the symbol (26) are fitted on the actuation lever (14) and on the receiving element (18), and wherein the symbol (26) can be illuminated by means of at least one further illumination device.

## Revendications

1. Dispositif (10) d'actionnement pour la commande d'un système (12), notamment électronique, de frein de stationnement d'un véhicule, notamment d'un véhicule utilitaire, comprenant au moins un levier (14) d'actionnement, le levier (14) d'actionnement ayant au moins un bouton (16) d'actionnement et comprenant au moins un élément (18) de réception, le levier (14) d'actionnement et l'élément (18) de réception étant reliés entre eux à rotation et pouvant tourner l'un par rapport à l'autre autour d'un axe de rotation, le dispositif (10) d'actionnement ayant au moins un état (S2P) de commutation d'actionnement et au moins un état (S2D) de commutation de desserrage, l'état (S2P) de commutation d'actionnement provenant au moins d'un premier mouvement de rotation du levier (14) d'actionnement dans un premier sens (DR1) de rotation, rapporté à l'élément (18) de réception et d'un premier actionnement du bouton (16) d'actionnement et **caractérisé en ce que** l'état de commutation de desserrage résulte au moins d'un deuxième mouvement de rotation du levier (14) d'actionnement dans le premier sens (DR1) de rotation, rapporté à l'élément (18) de réception, et d'un deuxième actionnement du bouton (16) d'actionnement, l'état (S2P) de commutation d'actionnement étant associé à un actionnement du système (12) de frein de stationnement, et l'état (S2D) de commutation de desserrage étant associé à un desserrage du système (12) de frein de stationnement.

2. Dispositif (10) d'actionnement suivant la revendication 1,
**caractérisé en ce que**
le dispositif (10) d'actionnement a un état (TT) de commutation de test de remorque, l'état (TT) de commutation de test de remorque provenant au moins d'un troisième mouvement de rotation du levier (14) d'actionnement dans le premier sens (DR1) de rotation, rapporté à l'élément (18) de réception, et l'état (TT) de commutation de test de remorque étant associé à une fonction de test de remorque du système (12) de frein de stationnement.

3. Dispositif (10) d'actionnement suivant l'une des revendications précédentes,
**caractérisé en ce que**
le dispositif (10) d'actionnement a au moins un état (GRA) de commutation graduel, par lequel un état de commutation d'actionnement graduel et/ou un état de commutation de desserrage graduel peut être établi.

4. Dispositif (10) d'actionnement suivant l'une des revendications précédentes,
**caractérisé en ce que**
le dispositif (10) d'actionnement a au moins une première butée (20) en rotation, au moins une deuxième butée (22) en rotation, au moins une position (RUP) de commutation radiale et au moins une position (RAP) initiale radiale, qui sont disposées le long d'une section courbe de voie en forme de cercle, la position (RAP) initiale radiale étant disposée sur la première butée (20) en rotation et la position (RUP) de commutation radiale étant disposée sur la deuxième butée (22) en rotation.

5. Dispositif (10) d'actionnement suivant l'une des revendications précédentes,
**caractérisé en ce que**
l'état (S2P) de commutation d'actionnement provient du premier actionnement du bouton (16) d'actionnement, en raison du premier mouvement de rotation du levier (14) d'actionnement dans le premier sens (DR1) de rotation, à partir de sa position (RAP) initiale radiale, si le levier (14) d'actionnement est disposé à la position (RUP) de commutation radiale et si le véhicule utilitaire se trouve sensiblement à l'arrêt.

6. Dispositif (10) d'actionnement suivant l'une des revendications précédentes,
**caractérisé en ce que**
l'état (S2D) de commutation de desserrage provient du deuxième actionnement du bouton (16) d'actionnement, en raison du deuxième mouvement de rotation du levier (14) d'actionnement dans le premier sens (DR1) de rotation à partir de sa position (RAP) initiale radiale, si le levier (14) d'actionnement est disposé à la position (RUP) de commutation radiale et si le véhicule se trouve sensiblement à l'arrêt.

7. Dispositif (10) d'actionnement suivant l'une des revendications précédente, en combinaison avec la revendication 2,
**caractérisé en ce que**
l'état (TT) de commutation de test de remorque provient du troisième mouvement de rotation du levier (14) d'actionnement dans le premier sens (DR1) de rotation à partir de sa position (RAP) initiale radiale, si le levier (14) d'actionnement est disposé à la position (RUP) de commutation radiale et si le dispositif (10) d'actionnement se trouve dans l'état (S2P) de commutation d'actionnement.

8. Dispositif (10) d'actionnement suivant l'une des revendications précédentes,
**caractérisé en ce que**
l'état de commutation d'actionnement graduel provient d'un quatrième mouvement de rotation du levier (14) d'actionnement dans le premier sens (DR1) de rotation à partir de sa position (RAP) initiale radiale jusqu'au maximum à la position (RUP) de commutation radiale, si, pendant ce quatrième mouvement de rotation du levier (14) d'actionnement, un actionnement continu du bouton (16) d'actionnement n'a pas lieu et si le véhicule utilitaire se trouve sensiblement dans un état en déplacement.

9. Dispositif (10) d'actionnement suivant l'une des revendications précédentes,
**caractérisé en ce que**
l'état de commutation de desserrage graduel provient d'un cinquième mouvement de rotation du levier (14) d'actionnement dans un deuxième sens (DR2) de rotation, rapporté à l'élément (18) de réception à partir d'une position angulaire du levier (14) d'actionnement, entre la position (RAP) initiale radiale et la position (RUP) de commutation radiale jusqu'à la position (RP) initiale radiale, si, pendant ce cinquième mouvement de rotation du levier (14) d'actionnement, un actionnement continu du bouton (16) d'actionnement n'a pas lieu et si le véhicule se trouve sensiblement dans un état en déplacement, le deuxième sens (DR2) de rotation étant contraire au premier sens (DR1) de rotation.

10. Dispositif (10) d'actionnement suivant l'une des revendications précédentes,
**caractérisé en ce qu'**
au moins un état (S2P, S2D, TT, GRA) de commutation du dispositif (10) d'actionnement peut être pris en fonction d'au moins un autre état de commutation d'un autre dispositif d'actionnement, notamment d'une pédale, du système de frein de service du véhicule utilitaire et/ou en fonction d'au moins un état de marche, notamment d'une vitesse du véhicule, du véhicule utilitaire.

11. Dispositif (10) d'actionnement suivant l'une des revendications précédentes,
**caractérisé en ce qu'**
au moins un état (S2P, S2D, TT, GRA) de commutation peut être pris en fonction d'un historique de positions angulaires et d'un historique de sens de rotation du levier (14) d'actionnement et d'un historique d'actionnement du bouton (16) d'actionnement.

12. Dispositif (10) d'actionnement suivant la revendication 11,
**caractérisé en ce que**
l'état de commutation de desserrage graduel peut être supprimé en fonction du fait que l'état (S2D) de commutation de desserrage a été pris jusqu'à ce que le levier (14) d'actionnement soit disposé à la position (RAP) initiale radiale.

13. Dispositif (10) d'actionnement suivant l'une des revendication précédentes,
**caractérisé en ce que**
les états (S2D, S2P, TT) de commutation, associés au fait que le levier (14) d'actionnement est à la position radiale, peuvent être pris dans une plage radiale à la position (RUP) de commutation radiale.

14. Dispositif (10) d'actionnement suivant la revendication 13,
**caractérisé en ce qu'**
une extrémité de la plage radiale, loin de la position (RUP) de commutation radiale, est délimitée par un élément de résistance élastique, rapporté à un mouvement de rotation du levier (14) d'actionnement.

15. Dispositif (10) d'actionnement suivant l'une des revendications précédentes,
**caractérisé en ce que**
le dispositif (10) d'actionnement comprend au moins un dispositif (24) d'éclairage et au moins un symbole (26), qui indique l'état de commutation respectif du dispositif d'actionnement et un état de fonctionnement respectif du système (12) électronique de frein de stationnement et/ou du système électronique de frein de service, le dispositif (24) d'éclairage et/ou le symbole (26) étant mis sur le levier (14) d'actionnement et sur l'élément (18) de réception et le symbole (26) pouvant être éclairé au moyen d'au moins un autre dispositif d'éclairage.
